# EUROPÄISCHE PATENTSCHRIFT

(11) **EP 0 848 032 B1**
(45) Veröffentlichungstag und Bekanntmachung des Hinweises auf die Patenterteilung: **10.05.2000**
(21) Anmeldenummer: 97120223.9
(22) Anmeldetag: 19.11.1997
(51) Int. Cl.: C08K 3/00, C08K 13/02, C08L 67/06

(54) **Flammwidrige, ungesättigte Polyesterharze**
Flame retardant unsaturated polyester resins
Résines de polyesters insaturés ignifuges

(30) Priorität: 11.12.1996 DE 19651470
(43) Veröffentlichungstag der Anmeldung: 17.06.1998
(73) Patentinhaber: Clariant GmbH, 65926 Frankfurt am Main (DE)
(72) Erfinder: Siegberg, Reinhold, 61462 Königstein (DE); Hörold, Sebastian, Dr., 50374 Erftstadt (DE); Staendeke, Horst, Dr., 53797 Lohmar (DE); Arnsmann, Guido, 50354 Hürth (DE)

(56) Entgegenhaltungen:
- EP-A- 0 730 000
- US-A- 4 957 950
- DATABASE WPI Section Ch, Week 8706 Derwent Publications Ltd., London, GB; Class A23, AN 87-040168 XP002059568 & JP 61 296 057 A (HITACHI CHEM CO LTD)
- DATABASE WPI Section Ch, Week 9637 Derwent Publications Ltd., London, GB; Class A13, AN 96-368436 XP002059569 & JP 08 176 450 A (SUMITOMO BAKELITE CO LTD)

## Beschreibung

Die Erfindung betrifft halogenfreie und flammwidrige ungesättigte Polyesterharze, ein Verfahren zu deren Herstellung und ihre Verwendung.

Bauteile aus mit Glasfasern verstärkten ungesättigten Polyesterharzen zeichnen sich durch ihre guten mechanischen Eigenschaften, ihre geringe Dichte, weitgehende Chemikalienresistenz und ihre ausgezeichnete Oberflächenqualität aus. Diese Eigenschaften sowie der günstige Preis haben dazu geführt, daß sie in den Anwendungsbereichen Schienenfahrzeuge, Bauwesen und Luftfahrt zunehmend die metallischen Werkstoffe verdrängen.

Abhängig vom jeweiligen Anwendungsgebiet werden an die ungesättigten Polyesterharze unterschiedliche Anforderungen hinsichtlich mechanischer, elektrischer und brandschutztechnischer Eigenschaften gestellt. So wurden in jüngerer Zeit insbesondere im Bereich Schienenfahrzeuge die Brandschutzanforderungen erheblich verschärft.

Es ist bekannt, ungesättigte Polyesterharze dadurch flammwidrig einzustellen, daß man brom- oder chlorhaltige Säuren oder Alkoholkomponenten verwendet. Beispiele hierfür sind Hexachloroendomethylentetrahydrophthalsäure (HET-Säure), Tetrabromphthalsäure oder Dibromneopentylglykol. Als Synergist wird häufig Antimontrioxid verwendet.

In der JP-A-05245838 (CA 1993: 672700) werden zur Verbesserung der Flammwidrigkeit Aluminiumhydroxid, roter Phosphor und Antimontrioxid mit einem bromierten Harz kombiniert, eingesetzt. Nachteilig an solchen brom- oder chlorhaltigen Harzen ist, daß im Brandfall korrosive Gase entstehen, die zu erheblichen Schäden an elektronischen Bauteilen, etwa an Relais in Schienenfahrzeugen etc., führen können. Von wesentlichem Nachteil ist auch, daß unter ungünstigen Bedingungen polychlorierte oder polybromierte Dibenzodioxine und -furane entstehen können.

Es besteht somit ein zunehmender Bedarf an halogenfreien und flammwidrigen ungesättigten Polyesterharzen, die dann zu flammwidrigen Endprodukten verarbeitet werden können.

Aus dem Stand der Technik ist bekannt, daß man Formmassen aus ungesättigten Polyesterharzen mit Füllstoffen wie etwa Aluminiumhydroxid ausrüstet. Durch die Wasserabspaltung aus dem Aluminiumhydroxid bei höheren Temperaturen wird hiermit eine gewisse Flammwidrigkeit erreicht. Bei sehr hohen Füllgraden von 150 bis 200 Teilen Aluminiumhydroxid pro 100 Teile ungesättigtes Polyesterharz kann dann ein Selbstverlöschen und eine geringe Rauchgasdichte erreicht werden. Nachteilig bei solchen Systemen ist das hohe spezifische Gewicht des gesamten Materials, das man beispielsweise durch den Zusatz von Hohlglaskugeln zu verringern sucht [Stauffer, G. et al., Kunststoffe 85 (1995) 4].

In der polnischen Patentanmeldung 159350 (CA 1995: 240054) werden Laminate mit bis zu 180 Teilen Magnesiumhydroxid pro 100 Teile ungesättigter Polyesterharze beschrieben. Bedingt durch die hohe Viskosität solcher ungehärteter ungesättigter Polyesterharze mit dem Aluminiumhydroxid oder Magnesiumhydroxid als Flammschutzmittel kann mit solchen Rezepturen nicht nach dem Injektionsverfahren gearbeitet werden.

Das vorgenannte Injektionsverfahren ist dadurch gekennzeichnet, daß zwischen 2 starren Formhälften Glasfaserverstärkungen gelegt werden und eine kalt-härtbare Reaktionsmasse nach dem Schließen der Formhälften in den von der Glasfaserverstärkung zum Teil ausgefüllten Hohlraum gespritzt wird. Naturgemäß ist hierfür eine pump- bzw. fließfähige ungesättigte Polyesterharz-Mischung (als Reaktionsmasse) Voraussetzung.

Als Verstärkungsmaterialien werden heutzutage überwiegend Textilglasmatten mit styrolunlöslichen Bindern eingesetzt. Geeignet sind auch Endlosmatten und Gewebe mit verschiedenen Flächengewichten.

Um den Füllstoffgehalt zu verringern, ist es möglich, Aluminiumhydroxid mit Ammoniumpolyphosphat zu kombinieren, wie in der DE-A-37 28 629 beschrieben.

Die Verwendung von rotem Phosphor als Flammschutzmittel für ungesättigte Polyesterharze beschreibt die JP-A-57016017 (CA 96 (22): 182248).

Eine Kombination von Aluminiumhydroxid, rotem Phosphor und Antimontrioxid als Flammschutzmittel für ungesättigte Polyesterharze wird in der JP-A-55094918 (CA 93 (24): 22152T) beschrieben.

Nach der PL-A-161333 (CA 1994: 632278) wird durch die Verwendung von Aluminiumhydroxid, Magnesiumhydroxid oder basisches Magnesiumcarbonat, rotem Phosphor und gegebenenfalls hochdisperser Kieselsäure eine geringe Rauchgasdichte und Zersetzungsprodukte von geringer Toxitität erhalten.

Schließlich beschreibt die DE-OS 21 59 757 die Verwendung von Melamin und Aluminiumhydroxid als Flammschutzmittel in ungesättigten Polyesterharzen.

Alle vorgenannten ungesättigten Polyesterharze sowie die zu ihrer Herstellung beschriebenen Verfahren weisen jedoch den erheblichen Nachteil auf, daß sie einen sehr hohen Füllstoffanteil enthalten und daher mittels den industriell weit verbreiteten Injektionsverfahren nicht zu den erwünschten Produkten verformt werden können. Sämtliche bisher bekannten Kombinationen von Aluminiumhydroxid mit anderen Flammschutzmitteln oder anderen Flammschutzmittelsystemen können auf diese Art und Weise nicht oder nur schwierig verarbeitet werden.

Es ist daher Aufgabe der vorliegenden Erfindung, halogenfreie und flammwidrige ungesättigte Polyesterharze zur Verfügung zu stellen, die bei einer Weiterverarbeitung in Endprodukte bereits bei einem geringen Füllstoffgehalt die in verschiedenen Bereichen geltenden Flammschutznormen erfüllen. Außerdem sollen die flammwidrigen ungesättigten Polyesterharze die Möglichkeit bieten, diese nach dem Injektionsverfahren weiterzuverarbeiten.

Die vorgenannte Aufgabe wird gelöst durch ungesättigte Polyesterharze der eingangs beschriebenen Art, dadurch gekennzeichnet, daß sie als Flammschutzmittel eine Kombination aus Aluminiumhydroxid, eine Phosphor-Stickstoff-Komponente und roten Phosphor enthalten.

Bevorzugt ist als Phosphor-Stickstoff-Komponente Ammoniumpolyphosphat enthalten.

Bevorzugt sind 5 bis 50 Masseteile Ammoniumpolyphosphat je 100 Masseteile ungesättigter Polyesterharze enthalten.

Es ist auch möglich, ein Ammoniumpolyphosphat einzusetzen, das 0,5 bis 25 Masse% eines wasserunlöslichen, gegebenenfalls gehärteten Kunstharzes, welches die einzelnen Ammoniumpolyphosphatteilchen umhüllt, enthält. Alternativ kann das Ammoniumpolyphosphat 0,5 bis 25 Masse% eines gehärteten Melamin/Formaldehyd-Harzes, wobei das Melamin/Formaldehyd-Harz die einzelnen Ammoniumpolyphosphatteilchen umhüllt, enthalten.

Bevorzugt sind 10 bis 100 Masseteile Aluminiumhydroxid je 100 Masseteile ungesättigter Polyesterharze enthalten.

Bevorzugt enthält die Kombination mindestens eine weitere Stickstoff- Komponente.

Bevorzugt sind 1 bis 10 Masseteile mindestens einer weiteren Stickstoff-Komponente je 100 Masseteile ungesättigter Polyesterharze enthalten.

Bevorzugt handelt es sich bei der weiteren Stickstoff-Komponente um Melamin oder Melaminderivate der Cyanursäure oder der Isocyanursäure, Melaminsalze, Dicyandiamid, Guanidinverbindungen oder um Kondensationsprodukte von Ethylenharnstoff mit Formaldehyd.

Bevorzugt enthalten die flammwidrigen ungesättigten Polyesterharze 1 bis 25 Masseteile roten Phosphor je 100 Masseteile ungesättigter Polyesterharze.

Bevorzugt enthält der rote Phosphor 0,1 bis 5 Masse% eines Oxidationsstabilisators und 0,5 bis 20 Masse% eines wasserunlöslichen, gegebenenfalls gehärteten Kunstharzes, welches die einzelnen Teilchen des roten Phosphors umhüllt.

Bevorzugt enthält das ungesättigte Polyesterharz
40 bis 75 Masseteile Aluminiumhydroxid,
1 bis 10 Masseteile roter Phosphor,
2 bis 20 Masseteile Ammoniumpolyphosphat und
0 bis 5 Masseteile Melamin oder Melamincyanurat
je 100 Masseteile ungesättiger Polyesterharze.

Die vorliegende Aufgabe wird ebenfalls gelöst durch ein Verfahren zur Herstellung von halogenfreien und flammwidrigen ungesättigten Polyesterharzen, dadurch gekennzeichnet, daß man ungesättigte Polyersterharze mit einem Flammschutzmittel in Form einer Kombination aus Aluminiumhydroxid, Ammoniumpolyphosphat und rotem Phosphor vermischt.

Bevorzugt wird bei dem obigen Verfahren der Kombination eine weitere Stickstoff-Komponente zugemischt.

Bevorzugt werden
10 bis 100 Masseteile Aluminiumhydroxid,
2 bis 50 Masseteile Ammoniumpolyphosphat,
1 bis 25 Masseteile roter Phosphor und
0 bis 10 Masseteile Melamin oder Melamincyanurat als Kombination mit
100 Masseteile ungesättiger Polyesterharze
vermischt.

Besonders bevorzugt werden
40 bis 75 Masseteile Aluminiumhydroxid,
1 bis 10 Masseteile Ammoniumpolyphosphat,
2 bis 20 Masseteile roter Phosphor und
1 bis 5 Masseteile Melamin oder Melamincyanurat als Kombination mit
100 Masseteile ungesättiger Polyesterharze
vermischt.

Die vorgenannte Aufgabe wird ebenfalls gelöst durch Formkörper, Laminate oder Beschichtungen, die die erfindungsgemäßen oder erfindungsgemäß hergestellten ungesättigten Polyesterharze enthalten.

Bevorzugt sind diese Formkörper, Laminate oder Beschichtungen durch Glasfasern verstärkt.

Ungesättigte Polyesterharze sind Polykondensationsprodukte aus gesättigten und ungesättigten Dicarbonsäuren oder deren Anhydriden mit Diolen. Die ungesättigten Polyesterharze werden gehärtet durch radikalische Polymerisation mit Initiatoren, wie beispielsweise Peroxiden und Beschleunigern. Die Doppelbindungen in der Polyesterkette reagieren dabei mit der Doppelbindung des copolymerisierbaren Lösungsmittelmonomers.

Die wichtigsten Dicarbonsäuren sind Maleinsäureanhydrid, Furmarsäure und Terephthalsäure. Am häufigsten wird als Diol 1,2-Propandiol eingesetzt. Daneben lassen sich auch Ethylenglykol, Diethylenglykol und Neopentylglykol verwenden. Als Monomer zur Vernetzung ist Styrol am weitesten verbreitet. Es ist beliebig mit den ungesättigten Polyesterharzen mischbar und läßt sich gut copolymerisieren, wobei der Styrolgehalt der ungesättigten Polyesterharzen üblicherweise zwischen 25 und 40 Gew.-% liegt.

Die Herstellung der flammwidrigen Formkörper, die später entsprechend geprüft werden, erfolgt beispielsweise dadurch, daß man ein ungesättigtes Polyesterharz mit einem Flammschutzsystem aus Aluminiumhydroxid, Ammoniumpolyphosphat und rotem Phosphor und gegebenenfalls mindestens einer weiteren Stickstoff-Komponente vermischt und die resultierende Mischung bei Drücken von 3 bis 10 bar und Temperaturen von 20 bis 60 °C preßt ("kalt-naß"). Es ist auch möglich, die resultierende Mischung bei Drücken von 3 bis 10 bar und Temperaturen von 80 bis 150 °C zu pressen ("warm-naß"). Weiterhin ist es möglich, aus der resultierenden Mischung bei Drücken von 50 bis 150 bar und Temperaturen von 150 bis 160 °C Kunstharzmatten zu fertigen.

In den Beispielen wurden folgende Verbindungen eingesetzt:
®Alpolit SUP 403 BMT (Vianova Resins GmbH, Wiesbaden), ungesättigtes Polyesterharz, ca. 58 gew.-%ig in Styrol, Säurezahl max. 30 mg KOH/g, vorbeschleunigt und schwach thixotrop eingestellt, niedrigviskos.
®Martinal ON 921 (Martinswerk GmbH, Bergheim), Aluminiumhydroxid mit niedrigem Viskositätsanstieg; die Teilchengröße beträgt > 60 % < 45 µm.
®Hostaflam AP 422 (Hoechst AG, Frankfurt/Main), feinkörniges, in Wasser schwer lösliches Ammoniumpolyphosphat der Formel (NH₄PO₃)ₙ wobei n = ca. 700; die Teilchengröße beträgt > 99 % < 45 µm.
®Hostflam RP 654 (Hoechst AG, Frankfurt/Main), mikroverkapselter, stabilisierter roter Phosphor in Form einer 50 gew.-%igen Dispersion in einem styrolfreien ungesättigten Polyesterharz. Die Dichte der Dispersion beträgt bei 20 °C 1,45 g/cm³, die Viskosität bei 25 °C und 50 U/min ca. 25 Pa * s.

Kobaltbeschleuniger NL 49P (Akzo Chemie GmbH, Düren), Kobaltoktoatlösung in Dibutylphthalat mit einem Kobaltgehaltgehalt von 1 Masse%.

Butanox M 50 (Akzo Chemie GmbH, Düren), Methylethylketonperoxid, mit Dimethylphthalat phlegmatisiert, klare Flüssigkeit mit einem Aktiv-Sauerstoffgehalt von min. 9 Masse%.

### Herstellung der ungesättigten Polyesterharze und der Prüfkörper

Das ungesättigte Polyesterharz, die Flammschutzmittel und der Kobaltbeschleuniger werden mit einer Dissolverscheibe homogen vermsicht. Nach Zugabe des Peroxid-Starters (Butanox M50) wird nochmals homogenisiert. In einer beheizten Presse werden auf einer ®Hostaphan-Trennfolie und einem Stahlrahmen zwei Lagen Textilglas-Endlosmatte vom Flächengewicht 450 g/m² eingelegt.

Anschließend wird etwa die Hälfte des erhaltenen Gemisches aus ungesättigtem Polyesterharz und Flammschutzmittel gleichmäßig verteilt, eine weitere Glasplatte aufgelegt und darauf das restliche Gemisch verteilt. Das so entstandene Laminat wird mit einer Trennfolie abgedeckt und bei einer Temperatur von 50 °C während einer Stunde bei einem Preßdruck von 10 bar eine Preßplatte von 4 mm Dicke hergestellt. Das Probenmaß betrug jeweils 190 * 500 * 4 mm.

Die Prüfung des Brandverhaltens erfolgte bei den nachfolgenden Proben gemäß DIN 54837 (Einsatz von Werkstoffen für Schienenfahrzeuge des öffentlichen Personenverkehrs). Speziell in Deutschland müssen Materialien, die für den Innenausbau für Eisenbahnwaggons verwendet werden sollen, den Bestimmungen der DIN 5510, Teil 2, genügen und folgenden Kriterien entsprechen:

### 1. Brennbarkeitsklasse (S1-S5)

Klassifizierungsmerkmal ist die Länge des zerstörten Bereichs und die Nachbrenndauer. Relevant sind die folgenden Brennbarkeitsklassen:

### Brennbarkeitsklasse S2

| | |
|---|---|
| Länge des zerstörten Bereichs | ≤ 30 cm |
| Nachbrenndauer | Weiterbrennen der Probe bis zum Versuchsende mit Ablöschen ist zugelassen |

### Brennbarkeitsklasse S3

| | |
|---|---|
| Länge des zerstörten Bereichs | ≤ 25 cm |
| Nachbrenndauer | ≤ 100 s |

### Brennbarkeitsklasse S4

| | |
|---|---|
| Länge des zerstörten Bereichs | ≤ 20 cm |
| Nachbrenndauer | kein Nachbrennen |

Produkte dürfen auch dann noch in die Brennbarkeitsklasse S4 eingereiht werden, wenn ein Nachbrennen innerhalb des verbrannten Bereichs der Probe auftritt und der Mittelwert der Nachbrennzeiten 10 Sekunden nicht überschreitet.

### Brennbarkeitsklasse S5

| | |
|---|---|
| Länge des zerstörten Bereichs | 0 cm |
| Nachbrenndauer | kein Nachbrennen |

Bei den Brennbarkeitsklassen S2 und S5 ist zusätzlich während der Brandprüfung die Rauchentwicklung nach E DIN 54837 zu messen.

### 2. Rauchentwicklungsklasse (SR1, SR2)

Zur Klassifizierung wird das Integral der Lichtabschwächung herangezogen:

| | |
|---|---|
| Rauchentwicklungsklasse SR1 | Integral der Lichtabschwächung < 100 %*min |
| Rauchentwicklungsklasse SR2 | Integral der Lichtabschwächung < 50 %*min |

Darüberhinaus ist bei der Prüfung nach E DIN 54837 festzustellen, ob das Material brennend oder nicht brennend abtropft.

### 3. Tropfbarkeitsklasse (ST1, ST2)

Es wird festgestellt, ob das Material brennend oder nicht brennend abtropft.

| | |
|---|---|
| Tropfbarkeitsklasse ST1 | tropft/fällt brennend ab |
| Tropfbarkeitsklasse ST2 | tropft/fällt nicht oder nicht brennend ab |

Gemäß den nachfolgenden Tabellen wurden verschiedene Flammschutzsysteme/-mittel auf ihre Eignung hin geprüft.

Tabelle 1 zeigt Vergleichsbeispiele unter alleiniger Verwendung von Aluminiumhydroxid, Ammoniumpolyphosphat bzw. rotem Phosphor als Flammschutzmittel. Aus der Tabelle ist zu entnehmen, daß bei alleiniger Verwendung von Aluminiumhydroxid bis zu einer Konzentration von 90 Teilen auf 100 Teile ungesättigtes Polyesterharz keine S4-Einstufung zu erreichen ist.

Bei alleiniger Verwendung von Ammoniumpolyphosphat ist erst bei einer Konzentration von bis zu 75 Teilen auf 100 Teile ungesättigtes Polyesterharz eine S4-Einstufung zu erreichen.

Roter Phosphor wurde bis zu einer Konzentration von 15 Teilen auf 100 Teile ungesättigtes Polyesterharz (®Hostaflam RP 654 ist eine 50 gew.-%ige Dispersion, daher sind die in den Tabellen genannten Zahlen für die Konzentration an rotem Phosphor zu halbieren) geprüft, eine S4-Einstufung war nicht zu erreichen. Höhere Gehalte an rotem Phosphor erscheinen aufgrund der Brennbarkeit des roten Phosphors nicht sinnvoll.

**Tabelle 1 (Vergleichsbeispiele):**

| Brennverhalten nach DIN 55100 | | | | | | |
|---|---|---|---|---|---|---|
| Beispiel Nr. | Flammschutzmittel Teile/100 Teile ungesättigtes Polyesterharz | Nachbrenndauer [s] | zerstörter Bereich [cm] | Rauchgasdichteintegral [%] | Brennbarkeitsklasse | Rauchgasentwicklungsklasse |
| 1 | 30 ATH* | 70 | 20 | 47 | S2 | SR2 |
| 2 | 60 ATH | 4 | 15 | 27 | S3 | SR2 |
| 3 | 90 ATH | 2 | 13 | 19 | S3 | SR2 |
| 4 | 10 RP 654 | 6 | 22 | 91 | S3 | SR1 |
| 5 | 20 RP 654 | 55 | 21 | 114 | S3 | - |
| 6 | 30 RP 654 | 95 | 21 | 128 | S3 | - |
| 7 | 25 AP 422 | 4 | 23 | 76 | S3 | SR1 |
| 8 | 50 AP 422 | 4 | 22 | 60 | S3 | SR1 |
| 9 | 75 AP 422 | 0 | 19 | 48 | S4 | SR2 |

| | | | | | | |
|---|---|---|---|---|---|---|
| * ATH = Aluminiumtrihydrat (Aluminiumhydroxid) | | | | | | |

In Tabelle 2 sind die Brandergebnisse von ungesättigten Polyesterharz-Laminaten mit Ammoniumpolyphosphat und Aluminiumtrihydrat als Flammschutzmittel dargestellt. Durch diese Kombination war bis zu einem Gesamt-Flammschutzmittelgehalt von 70 Teilen auf 100 Teile ungesättigtes Polyesterharz immer noch keine S4-, SR2-Einstufung zu erreichen.

**Tabelle 2 (Vergleichsbeispiele):**

| Ammoniumpolyphosphat und Aluminiumtrihydrat | | | | | | |
|---|---|---|---|---|---|---|
| Beispiel Nr. | Flammschutzmittel Teile/100 Teile ungesättigtes Polyesterharz | Nachbrenndauer [s] | zerstörter Bereich [cm] | Rauchgasdichteintegral [%] | Brennbarkeitsklasse | Rauchgasentwicklungsklasse |
| 10 | 30 ATH | 9 | 20 | 80 | S3 | SR1 |
| | 15 AP 422 | | | | | |
| 11 | 40 ATH | 7 | 19 | 76 | S3 | SR1 |
| | 10 AP 422 | | | | | |
| 12 | 50 ATH | 5 | 18 | 54 | S3 | SR1 |
| | 10 APP 422 | | | | | |
| 13 | 60 ATH | 2 | 18 | 39 | S3 | SR1 |
| | 10 AP 422 | | | | | |

In Tabelle 3 sind die Brandergebnisse von ungesättigten Polyesterharz-Laminaten mit rotem Phosphor und Aluminiumtrihydrat als Flammschutzmittel dargestellt. Auch durch diese Kombination war bis zu einem Gesamt-Flammschutzmittelgehalt von 66,5 Teilen auf 100 Teile ungesättigtes Polyesterharz keine S4-, SR2-Einstufung zu erreichen.

**Tabelle 3 (Vergleichsbeispiele):**

| Roter Phosphor und Aluminiumtrihydrat | | | | | | |
|---|---|---|---|---|---|---|
| Beispiel Nr. | Flammschutz-mit tel Teile/100 Teile ungesättigtes Polyesterharz | Nachbrenndauer [s] | zerstörter Bereich [cm] | Rauchgasdichteintegral [%] | Brennbarkeitsklasse | Rauchgasentwicklungsklasse |
| 14 | 40 ATH | 1 | 18 | 48 | S3 | SR2 |
| | 11 RP 654 | | | | | |
| 15 | 60 ATH | 0 | 19 | 58 | S4 | SR1 |
| | 13 RP 654 | | | | | |

Die Tabelle 4 zeigt die erfindungsgemäße Kombination der drei Flammschutzmittel Aluminiumtrihydrat, Ammoniumpolyphosphat und rotem Phosphor. Hier ist durch Zusatz von maximal 70 Teilen fester Flammschutzmittel auf 100 Teile ungesättigtes Polyesterharz eine S4-, SR2-Einstufung zu erreichen. Aufgrund des geringen Füllstoffgehaltes können diese ungesättigten Polyesterharz-Laminate im Injektionsverfahren hergestellt werden.

**Tabelle 4 (Erfindung):**

| Kombination von Aluminiumtrihydrat, Ammoniumpolyphosphat und rotem Phosphor | | | | | | |
|---|---|---|---|---|---|---|
| Beispiel Nr. | Flammschutzmittel Teile/100 Teile Harz | Nachbrenndauer [s] | zerstörter Bereich [cm] | Rauchgasdichteintegral [%] | Brennbarkeitsklasse | Rauchgasentwicklungsklasse |
| 16 | 58 ATH | 0 | 16 | 47 | S4 | SR2 |
| | 10 AP 422 | | | | | |
| | 4 RP 654 | | | | | |
| 17 | 60 ATH | 0 | 17 | 45 | S4 | SR 2 |
| | 8 AP 422 | | | | | |
| | 4 RP 654 | | | | | |
| 18 | 65 ATH | 0 | 17 | 42 | S4 | SR2 |
| | 7 AP 422 | | | | | |
| | 4 RP 654 | | | | | |
| 19 | 60 ATH | 0 | 17 | 45 | S4 | SR2 |
| | 9 AP 422 | | | | | |
| | 3 RP 654 | | | | | |

Die nachfolgendeTabelle 5 zeigt die erfindungsgemäße Kombination der Flammschutzmittel Aluminiumtrihydrat, Ammoniumpolyphosphat, rotem Phosphor und einer Stickstoffverbindung, hier Melamincyanurat. Anstelle von Melamincyanurat können auch andere organische Stickstoffverbindungen wie Melamin, Melaminphosphat, Guanidinphosphat oder Dicyandiamid verwendet werden.

Auch hier ist bereits durch Zusatz von maximal 71 Teilen fester Flammschutzmittel auf 100 Teile ungesättigtes Polyesterharz eine S4-, SR2-Einstufung zu erreichen. Aufgrund des geringen Füllstoffgehaltes können diese ungesättigten Polyesterharz-Laminate mittels des industriell wichtigen Injektionsverfahrens hergestellt werden.

**Tabelle 5 (Erfindung):**

| Kombination von Aluminiumtrihydrat, Ammoniumpolyphosphat, rotem Phosphor und weitere Stickstoffverbindung (Melamincyanurat) als Flammschutzmittel | | | | | | |
|---|---|---|---|---|---|---|
| Beispiel Nr. | Flammschutzmittel Teile/100 Teile Harz | Nachbrenndauer [s] | zerstörter Bereich [cm] | Rauchgasdichteintegral [%] | Brennbarkeitsklasse | Rauchgasentwicklungsklasse |
| 20 | 58 ATH | 0 | 17 | 47 | S4 | SR2 |
| | 10 AP 422 | | | | | |
| | 2 RP 654 | | | | | |
| | 2 MC* | | | | | |
| 21 | 60 ATH | 0 | 16 | 42 | S4 | SR2 |
| | 8 AP 422 | | | | | |
| | 2 RP 654 | | | | | |
| | 2 MC | | | | | |
| 22 | 65 ATH | 0 | 16 | 40 | S4 | SR2 |
| | 6 AP 422 | | | | | |
| | 2 RP 654 | | | | | |
| | 2 MC | | | | | |
| 23 | 60 ATH | 0 | 16 | 49 | S4 | SR2 |
| | 6 AP 422 | | | | | |
| | 4 RP 654 | | | | | |
| | 2 MC | | | | | |

| | | | | | | |
|---|---|---|---|---|---|---|
| * MC = Melamincyanurat | | | | | | |

Insgesamt hat sich gezeigt, daß Aluminiumhydroxid, Ammoniumpolyphosphat und roter Phosphor für sich allein geprüft, selbst in höheren Konzentrationen, wenig wirksam sind.

Überraschenderweise wurde nun gefunden, daß eine erfindungsgemäße Kombination aus rotem Phosphor, Aluminiumhydroxid und Ammoniumpolyphosphat sowie gegebenenfalls einer oder mehrerer weiterer Stickstoffverbindungen geeignet sind, die für Kunststoffe, in diesem Fall ungesättigte Polyesterharze, beste Brennbarkeitsklasse S4 der DIN 5510, Teil 2, bei gleichzeitiger Einhaltung der Rauchentwicklungsklasse SR 2 zu erreichen.

Durch die erfindungsgemäße Kombination der vorgenannten verschiedenen Flammschutzmittel konnte die Brennbarkeitsklasse S4 sowie die Rauchentwicklungsklasse SR2 mit lediglich maximal 71 Teilen Flammschutzmittelmischung auf 100 Teile ungesättigtes Polyesterharz-Harz erreicht werden.

## Patentansprüche

1. Halogenfreie und flammwidrige ungesättigte Polyesterharze, dadurch gekennzeichnet, daß sie als Flammschutzmittel eine Kombination aus Aluminiumhydroxid, einer Phosphor-Stickstoff-Komponente und roten Phosphor enthalten.

2. Halogenfreie und flammwidrige ungesättigte Polyesterharze nach Anspruch 1, dadurch gekennzeichnet, daß als Phosphor-Stickstoff-Komponente Ammoniumpolyphoshat enthalten ist.

3. Halogenfreie und flammwidrige ungesättigte Polyesterharze nach Anspruch 1 oder 2, dadurch gekennzeichnet, daß sie 2 bis 50 Masseteile Ammoniumpolyphosphat je 100 Masseteile ungesättigter Polyesterharze enthalten.

4. Halogenfreie und flammwidrige ungesättigte Polyesterharze nach Anspruch 1 oder 3, dadurch gekennzeichnet, daß sie 10 bis 100 Masseteile Aluminiumhydroxid je 100 Masseteile ungesättigter Polyesterharze enthalten.

5. Halogenfreie und flammwidrige ungesättigte Polyesterharze nach einem oder mehreren der Ansprüche 1 bis 4, dadurch gekennzeichnet, daß die Kombination mindestens eine weitere Stickstoff-Komponente enthält.

6. Halogenfreie und flammwidrige ungesättigte Polyesterharze nach einem oder mehreren der Ansprüche 1 bis 5, dadurch gekennzeichnet, daß sie 1 bis 10 Masseteile mindestens einer weiteren Stickstoff-Komponente je 100 Masseteile ungesättigter Polyesterharze enthalten.

7. Halogenfreie und flammwidrige ungesättigte Polyesterharze nach Anspruch 6, dadurch gekennzeichnet, daß es sich bei der weiteren Stickstoff-Komponente um Melamin oder Melaminderivate der Cyanursäure oder der Isocyanursäure, Melaminsalze, Dicyandiamid, Guanidinverbindungen oder um Kondensationsprodukte von Ethylenharnstoff mit Formaldehyd handelt.

8. Halogenfreie und flammwidrige ungesättigte Polyesterharze nach einem oder mehreren der Ansprüche 1 bis 7, dadurch gekennzeichnet, daß sie 1 bis 25 Masseteile roten Phosphor je 100 Masseteile ungesättigter Polyesterharze enthalten.

9. Halogenfreie und flammwidrige ungesättigte Polyesterharze nach Anspruch 8, dadurch gekennzeichnet, daß der rote Phosphor 0,1 bis 5 Masse-% eines Oxidationsstabilisators und 0,5 bis 20 Masse-% eines wasserunlöslichen, gegebenenfalls gehärteten Kunstharzes, welches die einzelnen Teilchen des roten Phosphors umhüllt, enthält.

10. Halogenfreie und flammwidrige ungesättigte Polyesterharze nach einem oder mehreren der Ansprüche 1 bis 9, dadurch gekennzeichnet, daß sie
40 bis 75 Masseteile Aluminiumhydroxid,
1 bis 10 Masseteile roten Phosphor,
2 bis 20 Masseteile Ammoniumpolyphosphat und
0 bis 5 Masseteile Melamin oder Melamincyanurat
je 100 Masseteile ungesättiger Polyesterharze enthalten.

11. Verfahren zur Herstellung von halogenfreien und flammwidrigen ungesättigten Polyesterharzen, dadurch gekennzeichnet, daß man ungesättigte Polyesterharze mit einem Flammschutzmittel in Form einer Kombination aus Aluminiumhydroxid, Ammoniumpolyphosphat und rotem Phosphor vermischt.

12. Verfahren nach Anspruch 11, dadurch gekennzeichnet, daß man der Kombination eine weitere Stickstoff-Komponente zumischt.

13. Verfahren nach Anspruch 11 oder 12, dadurch gekennzeichnet, daß man
10 bis 100 Masseteile Aluminiumhydroxid,
2 bis 50 Masseteile Ammoniumpolyphosphat,
1 bis 25 Masseteile roten Phosphor und
0 bis 20 Masseteile Melamin oder Melamincyanurat als Kombination mit
100 Masseteile ungesättiger Polyesterharze
vermischt.

14. Verfahren nach Anspruch 13, dadurch gekennzeichnet, daß man
40 bis 75 Masseteile Aluminiumhydroxid,
2 bis 20 Masseteile Ammoniumpolyphosphat,
1 bis 10 Masseteile roten Phosphor und
1 bis 5 Masseteile Melamin oder Melamincyanurat als Kombination
mit 100 Masseteile ungesättiger Polyesterharze
vermischt.

15. Formkörper, Laminate oder Beschichtungen aus ungesättigten Polyesterharzen nach einem oder mehreren der Ansprüche 1 bis 10 oder herstellbar mit den ungesättigten Polyesterharzen nach dem Verfahren der Ansprüche 10 bis 14.

16. Formkörper, Laminate oder Beschichtungen nach Anspruch 15, dadurch gekennzeichnet, daß sie durch Glasfasern verstärkt sind.

## Claims

1. A halogen-free and flame-retardant unsaturated polyester resin which contains, as flame retardant, a combination of aluminum hydroxide, a phosphorus-nitrogen component and red phosphorus.

2. A halogen-free and flame-retardant unsaturated polyester resin as claimed in claim 1 which contains, as phosphorus-nitrogen component, ammonium polyphosphate.

3. A halogen-free and flame-retardant unsaturated polyester resin as claimed in claim 1 or 2 which contains from 2 to 50 parts by weight of ammonium polyphosphate per 100 parts by weight of unsaturated polyester resin.

4. A halogen-free and flame-retardant unsaturated polyester resin as claimed in claim 1 or 3 which contains from 10 to 100 parts by weight of aluminum hydroxide per 100 parts by weight of unsaturated polyester resin.

5. A halogen-free and flame-retardant unsaturated polyester resin as claimed in one or more of claims 1 to 4, wherein the combination contains at least one other nitrogen component.

6. A halogen-free and flame-retardant unsaturated polyester resin as claimed in one or more of claims 1 to 5 which contains from 1 to 10 parts by weight of at least one other nitrogen component per 100 parts by weight of unsaturated polyester resin.

7. A halogen-free and flame-retardant unsaturated polyester resin as claimed in claim 6, wherein the other nitrogen component is melamine or melamine derivatives of cyanuric acid or of isocyanuric acid, melamine salts, dicyandiamide, guanidine compounds or condensation products of ethyleneurea with formaldehyde.

8. A halogen-free and flame-retardant unsaturated polyester resin as claimed in one or more of claims 1 to 7 which contains from 1 to 25 parts by weight of red phosphorus per 100 parts by weight of unsaturated polyester resin.

9. A halogen-free and flame-retardant unsaturated polyester resin as claimed in claim 8 wherein the red phosphorus contains from 0.1 to 5% by weight of an antioxidant and from 0.5 to 20% by weight of a water-insoluble synthetic resin which may, if desired, have been cured and which encapsulates the individual particles of the red phosphorus.

10. A halogen-free and flame-retardant unsaturated polyester resin as claimed in one or more of claims 1 to 9 which contains
from 40 to 75 parts by weight of aluminum hydroxide,
from 1 to 10 parts by weight of red phosphorus,
from 2 to 20 parts by weight of ammonium polyphosphate and
from 0 to 5 parts by weight of melamine or melamine cyanurate
per 100 parts by weight of unsaturated polyester resin.

11. A process for preparing a halogen-free and flame-retardant unsaturated polyester resin, which comprises mixing an unsaturated polyester resin with a flame retardant in the form of a combination of aluminum hydroxide, ammonium polyphosphate and red phosphorus.

12. The process as claimed in claim 11, wherein another nitrogen component is admixed to the combination.

13. The process as claimed in claim 11 or 12, wherein
from 10 to 100 parts by weight of aluminum hydroxide,
from 2 to 50 parts by weight of ammonium polyphosphate,
from 1 to 25 parts by weight of red phosphorus and
from 0 to 20 parts by weight of melamine or melamine cyanurate are mixed as combination with
100 parts by weight of unsaturated polyester resin.

14. The process as claimed in claim 13, wherein
from 40 to 75 parts by weight of aluminum hydroxide,
from 2 to 20 parts by weight of ammonium polyphosphate,
from 1 to 10 parts by weight of red phosphorus and
from 1 to 5 parts by weight of melamine or melamine cyanurate are mixed as combination with
100 parts by weight of unsaturated polyester resin.

15. A shaped article, laminate or coating made from an unsaturated polyester resin as claimed in one or more of claims 1 to 10 or preparable using an unsaturated polyester resin by the process of claims 10 to 14.

16. A shaped article, laminate or coating as claimed in claim 15, which is reinforced by glass fibers.

## Revendications

1. Résine de polyesters insaturés sans halogène et ignifuge, caractérisée en ce qu'elle contient comme agent ignifugeant une combinaison d'hydroxyde d'aluminium, d'un composant à base d'azote et de phosphore et de phosphore rouge.

2. Résine de polyesters insaturés sans halogène et ignifuge selon la revendication 1, caractérisée en ce qu'elle contient comme composant à base d'azote et de phosphore le polyphosphate d'ammonium.

3. Résine de polyesters insaturés sans halogène et ignifuge selon la revendication 1 ou 2, caractérisée en ce qu'elle contient de 2 à 50 parties en masse de polyphosphate d'ammonium pour 100 parties en masse de résine de polyesters insaturés.

4. Résine de polyesters insaturés sans halogène et ignifuge selon la revendication 1 ou 3, caractérisée en ce qu'elle contient de 10 à 100 parties en masse d'hydroxyde d'aluminium pour 100 parties en masse de résine de polyesters insaturés.

5. Résine de polyesters insaturés sans halogène et ignifuge selon une ou plusieurs des revendications 1 à 4, caractérisée en ce que la combinaison contient au moins un autre composant azoté.

6. Résine de polyesters insaturés sans halogène et ignifuge selon une ou plusieurs des revendications 1 à 5, caractérisée en ce qu'elle contient de 1 à 10 parties en masse d'au moins un autre composant azoté pour 100 parties en masse de résine de polyesters insaturés.

7. Résine de polyesters insaturés sans halogène et ignifuge selon la revendication 6, caractérisée en ce qu'il s'agit pour l'autre composant azoté de mélamine ou de dérivés de mélamine de l'acide cyanurique ou de l'acide isocyanurique, de sels de mélamine, de dicyandiamide, de composés de guanidine ou de produits de condensations d'éthylène-urée avec le formaldéhyde.

8. Résine de polyesters insaturés sans halogène et ignifuge selon une ou plusieurs des revendications 1 à 7, caractérisée en ce qu'elle contient de 1 à 25 parties en masse de phosphore rouge pour 100 parties en masse de résine de polyesters insaturés.

9. Résine de polyesters insaturés sans halogène et ignifuge selon la revendication 8, caractérisée en ce que le phosphore rouge contient de 0,1 à 5% en masse d'un stabilisant anti-oxydation et de 0,5 à 20% en masse d'une résine synthétique insoluble dans l'eau, éventuellement durcie, qui enrobe les particules élémentaires du phosphore rouge.

10. Résine de polyesters insaturés sans halogène et ignifuge selon une ou plusieurs des revendications 1 à 9, caractérisée en ce qu'elle contient
de 40 à 75 parties en masse d'hydroxyde d'aluminium,
de 1 à 10 parties en masse de phosphore rouge,
de 2 à 20 parties en masse de polyphosphate d'ammonium et
de 0 à 5 parties en masse de mélamine ou de cyanurate de mélamine
pour 100 parties en masse de résines de polyesters insaturés.

11. Procédé de préparation de résines de polyesters insaturés sans halogène et ignifuges, caractérisé en ce que, l'on mélange des résines de polyesters insaturés avec un agent ignifugeant sous la forme d'une combinaison d'hydroxyde d'aluminium, de polyphosphate d'ammonium et de phosphore rouge.

12. Procédé selon la revendication 11, caractérisé en ce que, l'on ajoute à la combinaison un autre composant azoté.

13. Procédé selon la revendication 11 ou 12, caractérisé en ce que, l'on mélange
de 10 à 100 parties en masse d'hydroxyde d'aluminium,
de 2 à 50 parties en masse de polyphosphate d'ammonium,
de 1 à 25 parties en masse de phosphore rouge et
de 0 à 10 parties en masse de mélamine ou de cyanurate de mélamine sous la forme d'une combinaison avec
100 parties en masse de résines de polyesters insaturés.

14. Procédé selon la revendication 13, caractérisé en ce que, l'on mélange
de 40 à 75 parties en masse d'hydroxyde d'aluminium,
de 2 à 20 parties en masse de polyphosphate d'ammonium,
de 1 à 10 parties en masse de phosphore rouge et
de 1 à 5 parties en masse de mélamine ou de cyanurate de mélamine sous la forme d'une combinaison avec
100 parties en masse de résines de polyesters insaturés.

15. Pièces moulées, stratifiés ou revêtements constitués de résines de polyesters insaturés selon une ou plusieurs des revendications 1 à 10 ou préparés avec les résines de polyesters insaturés selon le procédé des revendications 10 à 14.

16. Pièces moulées, stratifiés ou revêtements selon la revendication 15, caractérisées en ce qu'elles sont renforcées avec des fibres de verre.
